# EUROPEAN PATENT APPLICATION

(11) **EP 4 099 475 A1**
(43) Date of publication of application: **07.12.2022**
(21) Application number: 21177700.8
(22) Date of filing: 04.06.2021
(51) Int. Cl.: H01M 10/44, H02J 7/00

(54) **METHOD OF OPERATING A CHARGER FOR A BATTERY AND CHARGER**

(71) Applicant: Sonova AG, 8712 Stäfa (CH)
(72) Inventor: GERBERT, Tim, 8618 Oetwil am See (CH); AAZAMI, Sahba, 1297 Founex (CH); SUTER, Maira, 8708 Männedorf (CH)
(74) Representative: Liedtke & Partner Patentanwälte

(57) **Abstract**

The invention relates to a method of operating a charger for a battery, the method comprising:
- setting an end of charge voltage (EOCV) and a recharge threshold voltage (RTV) to initial values and charging the battery until reaching the end of charge voltage (EOCV) upon detection that the battery has been connected to the charger,
- performing the following steps in a loop until the battery is disconnected from the charger: if a state of charge (SOC) voltage of the battery falls below the recharge threshold voltage (RTV), decreasing the recharge threshold voltage (RTV) and charging the battery until reaching the end of charge voltage (EOCV).

## Description

### Technical Field

The invention relates to a method of operating a charger for a battery and to a charger, in particular for charging a battery of a hearing device or an accessory.

### Background of the Invention

Li-Ion batteries suffer in terms of cycle life when exposed to high cell voltage over long periods of time. This can lead to accelerated self-discharge, especially when the battery is exposed to elevated temperature. If the battery is used in a device such as a hearing device or an accessory, the user may connect the device to a charger and let it remain connected for longer periods of time. This may be particularly critical for aged batteries. Recharge of batteries while connected to the charger is typically performed based on a fix voltage threshold.

In some cases, the end of charge (EOC) voltage may be dynamically varied using completed recharge cycle information. In this case the recharge cycle information has a dependency on physical removal of the device from the charger.

### Summary of the Invention

It is an object of the present invention to provide an improved method of operating a charger for a battery and an improved charger.

The object is achieved by a method according to claim 1 and by a charger according to claim 13.

Preferred embodiments of the invention are given in the dependent claims.

According to the invention, a method of operating a charger for a battery comprises:
- setting an end of charge voltage and a recharge threshold voltage to initial values and charging the battery until reaching the end of charge voltage upon detection that the battery has been connected to the charger,
- performing the following steps in a loop until the battery is disconnected from the charger: if a state of charge voltage of the battery falls below the recharge threshold voltage, decreasing the recharge threshold voltage and charging the battery until reaching the end of charge voltage.

In an exemplary embodiment, in the loop, the end of charge voltage is also decreased and used for the subsequent charging cycle.

In an exemplary embodiment, an auto recharge cycle count is determined by counting the number of charge cycles performed since the battery has been connected to the charger, wherein decreasing the recharge threshold voltage comprises subtracting the product of the auto recharge cycle count and a constant value from a previously valid recharge threshold voltage and/or wherein decreasing the end of charge voltage comprises subtracting the product of the auto recharge cycle count and a constant value from a previously valid end of charge voltage.

In an exemplary embodiment, the decrease of the recharge threshold voltage is limited by a recharge threshold voltage threshold limit and/or the decrease of the end of charge voltage is limited by an end of charge voltage threshold limit.

In an exemplary embodiment, the recharge threshold voltage and/or the end of charge voltage are/is cleared and/or reset to the respective initial value upon disconnection of the battery from the charger.

In an exemplary embodiment, the battery is a Li-Ion battery. In other embodiments, the battery may be of an alternative battery type, e.g. solid state or chemical such as NiMH, SilverZinc, Lead-Acid, etc. The method will have a dependency on the cell chemistry, especially the charging algorithm (e.g. not using continuous trickle charge after fully charged).

In an exemplary embodiment, the battery is arranged in a device and the method is performed upon detection that the battery has been connected to the charger through connecting the device to the charger.

In an exemplary embodiment, the device is a hearing device or an accessory for a hearing device.

According to an aspect of the present invention, a charger for charging a battery is provided, the charger configured to be connected to a battery and comprising a control unit configured to perform the method as described above.

The present invention addresses the case when the device will eventually attain full charge and remains in or connected to the charger for a long time which may be up to several weeks. The battery energy is drained resulting in reduced output voltage while in this state due to the following factors:
- normal self-discharge for a new battery
- enhanced self-discharge for aged batteries,
- enhanced self-discharge due to elevated temperatures and high state-of-charge (SOC).

An auto recharge regime can ensure that the battery is topped up from time to time in relation to the amount of energy which has been drained due to the above mentioned processes.

In the prior art, auto recharge is a process in which upon detection of a device battery state of charge falling below a maximum, i.e. full, threshold, i.e. a recharge threshold voltage, the battery is recharged in an effort to keep it always at a full state.

Such auto recharge event will increase the probability of cell degradation and potential cell failure.

The presently proposed algorithm replaces a fixed auto recharge regime with an adaptive system, whereby the number of recharge events is monitored and wherein the recharge threshold voltage and the end of charge voltage are adapted. The algorithm clears these values when the battery is taken out of or disconnected from the charger.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitative of the present invention, and wherein:
- Figure 1: is a schematic view of a charging profile for charging a battery known in the art, and
- Figure 2: is a schematic view of a method of charging a battery according to the invention.

Corresponding parts are marked with the same reference symbols in all figures.

### Detailed Description of Preferred Embodiments

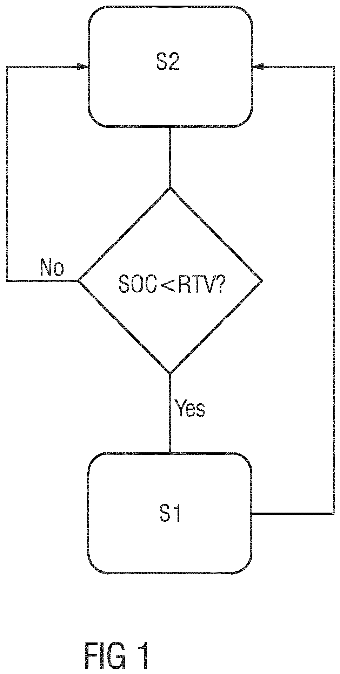

**Figure 1** is a schematic view of a charging profile for charging a battery, in particular a Li-Ion battery, e.g. used in a device such as a hearing device or an accessory, known in the art. In this case fixed recharge threshold limits are used. An End Of Charge (EOC) voltage is normally fixed for the life duration of the Battery. If the battery is connected to the charger, the battery will be charged in a step S1 until it is full, i.e. the EOC voltage has been reached in a step S2. If the battery subsequently remains connected to the charger and slowly discharges so that the battery voltage or state of charge SOC falls below a recharge threshold voltage RTV, the battery will be charged again.

In some cases, the end of charge (EOC) voltage may be dynamically varied using completed recharge cycle information. In this case the recharge cycle information has a dependency on physical removal of the device from the charger.

This imposes a design restriction, in the form of, e.g. having to stop recharging while the device is left (e.g. forgotten) in or connected to the charger after a full charge cycle. This means, that there is always a chance that, when the device is finally removed from the charger, the actual amount of charge left in the battery is considerably below the full capacity, due to various reasons including self-discharge of the battery while not in operation.

The present invention aims at reducing the life cycle degradation normally attributed with the charging processes. In this case the relative degradation can be reduced, hence increasing the overall useful life time of the device. This can be achieved using an estimation of the recharge cycle information.

To obtain the best retained state of charge, without compromising the battery state of health (BSOH), hence providing the most acceptable user experience, the following procedure is proposed.

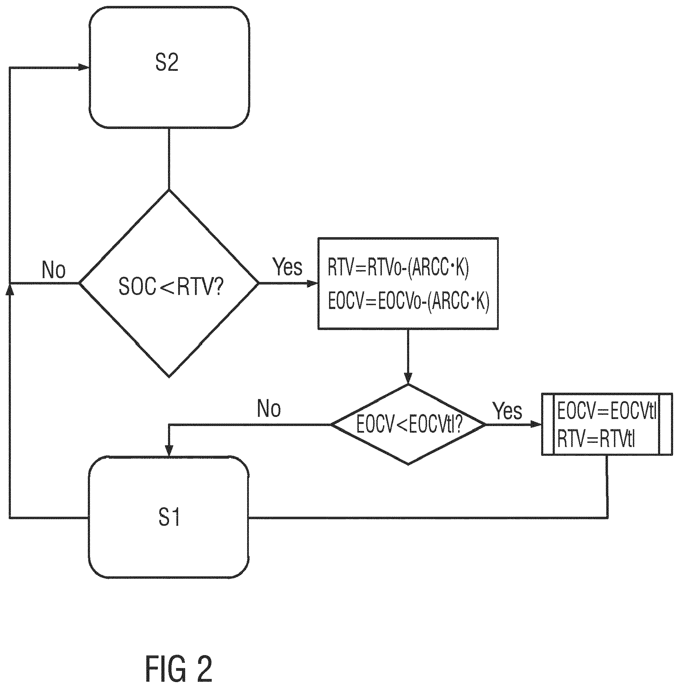

**Figure 2** is a schematic view of a method of charging a battery, e.g. a Li-Ion battery, in a device, e.g. a hearing device or an accessory for a hearing device. If the battery is connected to a charger, the battery will be charged in a step S1 until it is full, i.e. until an EOC voltage has been reached in a step S2. If the battery subsequently remains connected to the charger and slowly discharges so that the battery voltage or state of charge SOC falls below a recharge threshold voltage RTV, the battery will be recharged again but the recharge threshold voltage RTV and the end of charge voltage EOCV are dynamically varied in an effort to obtain the best battery state of health, for the life duration of the battery.

When a number of recharge events or auto recharge cycle count ARCC is determined, this information can be used to optimize performance by decreasing the recharge threshold voltage RTV. Furthermore, the end of charge voltage EOCV is reduced in concert, in order to generate less stress on the battery.

In particular, the new recharge threshold voltage RTV is determined by subtracting the product of the auto recharge cycle count ARCC and a constant value K from the previously valid recharge threshold voltage RTVo. The new end of charge voltage EOCV is determined by subtracting the product of the auto recharge cycle count ARCC and a constant value K from the previously valid end of charge voltage EOCVo. If the new end of charge voltage EOCV is less than an end of charge voltage threshold limit EOCVtl, then the new end of charge voltage EOCV is set to be equal to the end of charge voltage threshold limit EOCVtl and the new recharge threshold voltage RTV is set to be equal to a recharge threshold voltage threshold limit RTVtl, the battery is recharged until reaching the new end of charge voltage EOCV and after this, the next iteration will only begin if the battery voltage falls below the new recharge threshold voltage RTV. Otherwise, if the new end of charge voltage EOCV is greater than or equal to the end of charge voltage threshold limit EOCVtl, the battery is recharged until reaching the new end of charge voltage EOCV and after this, the next iteration will only begin if the battery voltage falls below the new recharge threshold voltage RTV.

This algorithm is executed every time a recharge cycle is initiated, and is a memoryless process, which means, when the device is finally removed or disconnected from the charger, all related parameters pertaining to the last cycle are cleared. A new session starts upon plugging the device into the charger. As long as the device remains connected to the charger it may be subject to several recharge cycles, wherein the recharge threshold voltage RTV and the end of charge voltage EOCV from the previous recharge cycle is respectively used to calculate the new recharge threshold voltage RTV and the new end of charge voltage EOCV for the subsequent recharge cycle.

In an exemplary embodiment, the constant value K may be the same to calculate the new recharge threshold voltage RTV and the new end of charge voltage EOCV. In another exemplary embodiment, there may be one constant value K1 to calculate the new recharge threshold voltage RTV and a different constant value K2 to calculate the new end of charge voltage EOCV. Depending on the battery characteristics and/or type, a (batch) training round may be carried out, e.g. at incoming inspection or at another stage of production.

In an exemplary embodiment, the end of charge voltage EOCV may be between 3.6 volts and 4.7 volts. The recharge threshold voltage RTV may for example be about 90% of the end of charge voltage EOCV, so for the end of charge voltage EOCV=4.2V the recharge threshold voltage RTV will be about 3.8V.

The method may result in that the battery is not always in a fully charged state when being disconnected from the charger. However, this appears to be a small, acceptable tradeoff for achieving a reduced cell degradation.

### List of References

- ARCC: auto recharge cycle count
- EOCV: end of charge voltage
- EOCVo: previously valid end of charge voltage
- EOCVtl: end of charge voltage threshold limit
- K: constant
- RTV: recharge threshold voltage
- RTVo: previously valid recharge threshold voltage
- RTVtl: recharge threshold voltage threshold limit
- S1: step
- S2: step
- SOC: state of charge

## Claims

1. A method of operating a charger for a battery, the method comprising:
- setting an end of charge voltage (EOCV) and a recharge threshold voltage (RTV) to initial values and charging the battery until reaching the end of charge voltage (EOCV) upon detection that the battery has been connected to the charger,
- performing the following steps in a loop until the battery is disconnected from the charger: if a state of charge (SOC) voltage of the battery falls below the recharge threshold voltage (RTV), decreasing the recharge threshold voltage (RTV) and charging the battery until reaching the end of charge voltage (EOCV).

2. The method of claim 1, wherein in the loop, the end of charge voltage (EOCV) is also decreased and used for the subsequent charging cycle.

3. The method of claim 1 or 2, wherein an auto recharge cycle count (ARCC) is determined by counting the number of charge cycles performed since the battery has been connected to the charger.

4. The method of claim 3, wherein decreasing the recharge threshold voltage (RTV) comprises subtracting the product of the auto recharge cycle count (ARCC) and a constant value (K) from a previously valid recharge threshold voltage (RTVo).

5. The method of claim 3 or 4, wherein decreasing the end of charge voltage (EOCV) comprises subtracting the product of the auto recharge cycle count (ARCC) and a constant value (K) from a previously valid end of charge voltage (EOCVo).

6. The method according to any one of the preceding claims, wherein the decrease of the recharge threshold voltage (RTV) is limited by a recharge threshold voltage threshold limit (RTVtl).

7. The method according to any one of the claims 2 to 6, wherein the decrease of the end of charge voltage (EOCV) is limited by an end of charge voltage threshold limit (EOCVtl).

8. The method according to any one of the preceding claims, wherein the recharge threshold voltage (RTV) is cleared or reset to the initial value upon disconnection of the battery from the charger.

9. The method according to any one of the preceding claims, wherein the end of charge voltage (EOCV) is cleared or reset to the initial value upon disconnection of the battery from the charger.

10. The method according to any one of the preceding claims, wherein the battery is a Li-Ion battery.

11. The method according to any one of the preceding claims, wherein the battery is arranged in a device and the method is performed upon detection that the battery has been connected to the charger through connecting the device to the charger.

12. The method according to claim 11, wherein the device is a hearing device or an accessory for a hearing device.

13. A charger for charging a battery, configured to be connected to a battery and comprising a control unit configured to perform the method according to any one of the preceding claims.
